# EUROPÄISCHE PATENTSCHRIFT

(11) **EP 3 415 383 B1**
(45) Veröffentlichungstag und Bekanntmachung des Hinweises auf die Patenterteilung: **14.06.2023**
(21) Anmeldenummer: 18176600.7
(22) Anmeldetag: 07.06.2018
(51) Int. Cl.: B60T 7/12, G08G 1/16

(54) **VERFAHREN UND VORRICHTUNG ZUR WARN-SIGNALISIERUNG EINES STARK-BREMSVORGANGES**
METHOD AND DEVICE FOR CREATING A WARNING SIGNAL OF A STRONG BRAKING EVENT
PROCÉDÉ ET DISPOSITIF DE SIGNALISATION D'AVERTISSEMENT D'UN PROCÉDÉ DE FREINAGE FORT

(30) Priorität: 16.06.2017 DE 102017005833
(43) Veröffentlichungstag der Anmeldung: 19.12.2018
(73) Patentinhaber: Wiemann, Hartmut, 22607 Hamburg (DE); Wiemann, Ralph, 22761 Hamburg (DE); Espig, Christina, 22609 Hamburg (DE)
(72) Erfinder: Wiemann, Hartmut, 22607 Hamburg (DE)
(74) Vertreter: Seemann & Partner Patentanwälte mbB

(56) Entgegenhaltungen:
- EP-A1- 2 523 174
- WO-A1-2008/022817
- WO-A1-2009/040263
- WO-A1-2009/043418
- DE-A1-102008 014 348
- DE-A1-102014 004 622
- US-A- 6 160 476

## Beschreibung

Die Erfindung betrifft eine Vorrichtung sowie ein Verfahren, für mit einem automatisierten Bremssystem ausgestattete Kraftfahrzeuge, bei dem zur Warn-Signalisierung eines automatisch eingeleiteten Stark-Bremsvorganges an den nachfolgenden Verkehr, dies durch mindestens einen im Bereich des Hecks des Kraftfahrzeuges angeordneten optischen Signalgeber erfolgt, so dass die Warnung entgegen der eigenen Fahrtrichtung abgestrahlt wird.

Der Anteil an mit Assistenzsystemen ausgestatteten Kraftfahrzeugen hat in den letzten Jahren stark zugenommen und weist auch in Zukunft großes Wachstumspotential auf. Die aktiven Assistenzsysteme basieren auf der Unterstützung des Fahrers durch vollautomatische Funktionen, die autonom in den Fahrprozess eingreifen. Als beispielhaft dafür sind etablierte Systeme wie ABS oder EPS anzusehen. Diese Assistenzsysteme tragen zur Erhöhung der allgemeinen Fahr- und Verkehrssicherheit bei.

Besonders hat sich im Bereich der aktiven Assistenzsysteme ein System hervorgetan, das mittels verschiedener Sensoren permanent den Abstand und dessen Änderung zu vorausfahrenden Fahrzeugen bestimmt oder auch plötzlich auftauchende Hindernisse detektiert und verarbeitet. Unter der Abkürzung ACC, automatischer Stauassistent und ähnlichen Bezeichnungen werden von allen Herstellern Assistenzsysteme mit der genannten Funktionalität als optionale Ausstattung oder in Sicherheitspaketen seit Jahren angeboten.

Eine wesentliche Funktion dieser aktiven Systeme ist es, kritische Verkehrssituationen mithilfe von ausgewerteten Sensor- und/oder Kameradaten zu erkennen und gegebenenfalls einen vollautomatischen Eingriff in den Fahrvorgang des Kraftfahrzeugs einzuleiten. Beispielweise kann aus Parametern wie der Geschwindigkeit des Fahrzeugs und dem Abstand zu einem vorrausfahrenden Fahrzeug mittels Hochgeschwindigkeitsrechnern in Echtzeit eine Situation erkannt werden, die ein sofortiges Abbremsen zur Kollisionsvermeidung erfordert. Wird diese Bremsung nicht oder nicht ausreichend stark vom Fahrer des Kraftfahrzeugs ausgeübt, so greift hier das System in den Bremsvorgang ein und löst gegebenenfalls eine Notbremsung aus, um die Verkehrssituation zu entschärfen. Somit können Auffahrunfälle in vielen Fällen vermieden werden.

Im Allgemeinen laufen die von automatischen Fahrerassistenzsystemen ausgelösten Eingriffe in mehreren Schritten ab, die gemeinsam eine Verlaufskurve bilden. Nach der Erkennung einer kritischen Verkehrssituation wird der Fahrer beispielsweise mittels akustischer und haptischer Signale gewarnt. Wird die Situation vom Fahrer nicht schnell genug entschärft, greift das System selbständig mit einer ersten Bremsstufe ein. Ist diese "erste Stufe" durchlaufen, wird bei einer weiterhin sehr kritischen Situation gegebenenfalls als "zweite Stufe" eine automatische Notbremsung eingeleitet.

Derartige Assistenzsysteme sind seit etwa dem Jahr 2009 öffentlich bekannt. Eine schriftliche Beschreibung erfolgt beispielsweise in der Studie TRL /-UK aus dem Jahr 2008.

Im internationalen Bereich werden derartige Assistenzsysteme mit "AEB" bezeichnet. Dies ist die Abkürzung für "Advanced Emergency Breaking". Eine weitere schriftliche Beschreibung ist in der Norm R-131 der UN-ECE seit dem Jahr 2013 definiert.

Aus dem erwähnten Stand der Technik sind auch die technischen Definitionen für die Begriffe einer Notbremsung und einer Starkbremsung bekannt.

Durch ein plötzliches starkes Abbremsen kann aber auch für einen Fahrer eines nachfolgenden Fahrzeugs eine kritische Verkehrssituation entstehen, weshalb der nachfolgende Verkehr frühzeitig und sicher gewarnt werden muss.

Da die Bremsverzögerung der ersten Stufe bei einem selbstständigen Eingriff eines Fahrerassistenzsystems in den Bremsvorgang in der Regel weniger stark ist, wird dieser Bremsvorgang dem nachfolgenden Verkehr wie ein gewöhnlicher, vom Fahrer ausgeführter Bremsvorgang durch einfaches rotes Dauerleuchten der Bremsleuchten signalisiert. Der nachfolgende Verkehr kann somit nicht zwischen einem automatisierten Eingriff und einem manuellen Bremsen unterscheiden. Jedoch ist im Falle des Eintretens einer automatischen Bremsung bei einem AEB System der Stufe 1 die Wahrscheinlichkeit für eine unmittelbar folgende manuelle oder automatische Notbremsung zur Kollisionsvermeidung wesentlich erhöht.

Gemäß dem bekannten Stand der Technik wird somit eine sensorische Überwachung oder eine Überwachung unter Verwendung von Kameras nach vorne in Fahrtrichtung durchgeführt, um ein Auffahren auf ein vorausfahrendes Fahrzeug also eine Kollision zu vermeiden. Zur Vermeidung eines derartigen Unfalles ist es möglich, dass das mit der Messeinrichtung ausgestattete betroffene Fahrzeug aktiv einen Bremsvorgang durchführt und hierdurch den Sicherheitsabstand wieder erhöht.

Zur Verringerung des Risikos einer rückwärtigen Kollision bestehen derzeit bereits einige aktive Möglichkeiten. Bekannt ist es darüber hinaus bereits, auch nach hinten unter Verwendung von Sensoren und/oder Kameras eine Abstandserfassung zum nachfolgenden Fahrzeug durchzuführen und bei Erreichen eines zu geringeren Abstandes den rückwärtigen Verkehr durch ein Warnsignal zu warnen. Dies erfolgt also analog zur Frontkollisionswarnung.

Aus dem Dokument DE 10 2014 004 622 A1 sind ein Verfahren und eine Vorrichtung zumindest zur Verminderung einer Kollisionsschwere eines Fahrzeuges und ein Fahrzeug aufweisend eine derartige Vorrichtung bekannt. Gemäß dieser Offenbarung ist eine kritische Verkehrssituation, die ggf. eine Notbremsung erfordert, mithilfe einer Vorrichtung erfassbar. Unter Berücksichtigung des heckseitigen Abstandes zu einem möglicherweise nachfolgenden Fahrzeug ist eine Bremsung ausführbar, wobei eine optionale erste Bremsstufe eine nur leichte Bremsverzögerung aufweist, sodass dem Fahrer des Fahrzeuges die Möglichkeit zum selbstständigen Eingriff in das Fahrverhalten ermöglicht ist und ein Fahrer eines nachfolgenden Fahrzeuges durch das heckseitig abgegebene Bremssignal warnbar ist. In einer zweiten Bremsstufe erfolgt dann, sofern dies weiterhin erforderlich ist, eine automatische Notbremsung mit starker Bremsverzögerung.

Weitere Verfahren und Vorrichtungen zur Generierung von Warnsignalen im Zusammenhang mit der Durchführung von Bremsvorgängen bei Kraftfahrzeugen werden in der WO 2008/022817 A1, der WO 2009/043418 A1 sowie der DE 10 2008 014348 A1 beschrieben. Weitere Varianten zur Durchführung von Bremsvorgängen sind aus der WO 2009/040263 A1 sowie der EP 2 523 174 A1 bekannt.

In der US 6 160 476 A wird die Generierung eines in Fahrtrichtung nach hinten abgestrahlten Bremssignales beschrieben, das zum Beginn der Durchführung eines Notbremsvorganges generiert wird. Als Leuchtmittel wird eine für die Anzeige einer Durchführung normaler Bremsvorgänge am Fahrzeug vorhandene Bremsleuchte verwendet.

Aus der DE 10 2004 058 139 A1 sind ein weiteres Verfahren und eine Vorrichtung zur Generierung von Warnsignalen bekannt.

Eine Aufgabe der vorliegenden Erfindung ist es, eine Vorrichtung zu schaffen, die nachfolgende Verkehrsteilnehmer optimal und frühzeitig über das Vorliegen einer vom Fahrerassistenzsystem selbst eingeleiteten, autonomen Stark-Bremsung informiert.

Insbesondere besteht auch eine Aufgabe der Erfindung darin, die bekannten AEB-Systeme gemäß der Definition in der ECE-Regelung R131, technisch vorteilhaft zu erweitern und dabei eine Vorrichtung zu schaffen, die nachfolgende Verkehrsteilnehmer über das Vorliegen einer vom Fahrerassistenzsystem eingeleiteten automatischen Stark-Bremsung, zur bevorstehenden Kollisionsvermeidung mittels Notbremsung, informiert.

Diese Aufgabe wird erfindungsgemäß durch die Merkmalskombination von Patentanspruch 11 gelöst.

Insbesondere ist vorgesehen, dass die Vorrichtung eine Auswertungs- und Steuereinheit aufweist, durch die ein Signalgeber ansteuerbar ist. Über den Signalgeber ist die Information, dass ein automatischer Stark-Bremsvorgang eingeleitet wurde, an nachfolgende Fahrer übermittelbar. Insbesondere ist an die Ansteuerung eines optischen Signalgebers gedacht, durch den ein gelbes Warnlicht konstanter Leuchtkraft erzeugbar ist. Vorteilhaft für eine erfindungsgemäße Vorrichtung ist die Nutzung der Richtungsanzeiger am Heck des Kraftfahrzeugs als Signalgeber.

Eine weitere Aufgabe der Erfindung ist es, ein Verfahren zu schaffen, das nachfolgende Verkehrsteilnehmer über das Vorliegen einer vom Fahrerassistenzsystem eingeleiteten, automatischen (autonomen) Stark-Bremsung informiert.

Diese Aufgabe wird erfindungsgemäß durch die Merkmalskombination von Patentanspruch 1 gelöst.

Insbesondere ist vorgesehen, dass das Verfahren eine Steuerung derart implementiert, dass ein Warnsignal in Abhängigkeit des Auftretens eines automatischen Bremsvorgangs aktiviert wird. Dieser automatische Bremsvorgang kann in der Auswerteinheit weiter spezifiziert werden, beispielsweise als automatischer Bremsvorgang der Stufe 1 einer Verlaufskurve. Die Aktivierung des Warnsignals kann nach dem erfindungsgemäßen Verfahren von zusätzlichen Parametern abhängen, die beispielsweise durch die Bremsverzögerung und die Fahrzeuggeschwindigkeit gegeben sein können. Es kann eine definierte Bremsverzögerung als Grenzwert genutzt werden, bei dessen Unterschreitung das Warnsignal deaktiviert wird. Die Fahrzeuggeschwindigkeit kann von dem erfindungsgemäßen Verfahren als weitere Eingangsgröße genutzt werden, wobei eine Aktivierung des Warnsignals erst oberhalb einer bestimmten Geschwindigkeit denkbar ist.

Weiterhin wird das Warnsignal in einer vorteilhaften Ausführungsform der Erfindung nur für den Fall einer starken automatisierten Abbremsung, die oberhalb einer bestimmten Bremsverzögerung liegt, von der erfindungsgemäßen Steuereinheit aktiviert, um eine Abnutzung der Warnwirkung zu vermeiden. Um zwischen verschiedenen automatisierten Bremsvorgängen zu unterscheiden, weist eine erfindungsgemäße Vorrichtung zusätzlich eine Auswerteeinheit auf, die über eine digitale oder eine analoge Schnittstelle mit weiterer Fahrzeugelektronik kommuniziert. Insbesondere ist an die Auswertung eines von einer Steuerelektronik des Fahrzeugs bereitgestellten Signals zur Auslösung eines automatisierten Bremsvorganges gedacht, gemäß dem eine automatische Abbremsung mit einer vorgegebenen Bremsverzögerung ausgeführt wird. Die Schnittstelle kann beispielsweise als CAN, LIN oder ein proprietäres Interface ausgeführt sein.

Das erfindungsgemäße Warnsignal fungiert somit als Vorwarnung vor einer möglicherweise unmittelbar folgenden, automatischen oder manuellen Notbremsung, da es bereits in der ersten Stufe einer Verlaufskurve eines vom Fahrerassistenzsystem eingeleiteten Bremsvorganges ein zusätzliches Warnsignal zum normalen Bremslicht darstellt.

Insbesondere basierend auf dieser Vorwarnung kann ein nachfolgender Fahrer zeitoptimal die Warnphase als Reaktionszeit nutzen, um dann zeitgleich die Notbremsungsphase beginnen können. (Nach Warn-/ Reaktionsphase, für Beide zeitgleich der Beginn der Notbremsphase).

Durch die erfindungsgemäße Generierung des rückwärtigen Warnsignals bereits bei der Einleitung einer automatisierten Abbremsung des eigenen Fahrzeuges wird eine Zeitverzögerung zu einem gleichzeitigen Reflex des Folgefahrers definitiv vermieden.

Somit wird der Fahrer akustisch und der Folgefahrer visuell zum identisch gleichen Zeitpunkt wirksam gewarnt, so dass das Risiko eines Auffahrunfalles in Fahrtrichtung hinten hierdurch deutlich vermindert werden kann.

Derartige Warnungen an nachfolgende Fahrzeuge sind auch international in der zukünftigen "car to car"-Kommunikation als fester Bestandteil vorgesehen, werden aber bereits heute dringend als Information für einen Fahrer eines Kraftfahrzeugs benötigt. Eine erfindungsgemäße Lösung mittels Lichtsignal kann als frühzeitige und wirksame Vorrichtung noch vor der Etablierung von "car to car"-Kommunikation eingesetzt werden und kurzfristig Sach- und Personenschäden durch Auffahrunfälle verhindern. Zukünftig ist auch die parallele Nutzung von Lichtsignal und Übermittlung der Warnung per "car to car"-Kommunikation möglich und sinnvoll.

Eine kostengünstige Implementierung ist durch die Nutzung vorhandener Signale und Leuchteinrichtungen gegeben.

Eine erfindungsgemäße Lösung mittels Lichtsignal kann als frühzeitige und wirksame Vorrichtung noch vor der breiten Etablierung von "car to car" - Kommunikation eingesetzt werden, wäre auch von allen Fahrern der sich derzeit schon im Verkehr befindlichen Fahrzeuge - einschließlich Motorrädern - "empfangbar" und könnte sehr kurzfristig Sach- und Personenschäden verhindern.

Im Folgenden wird die Erfindung anhand von Figuren in beispielhaften Ausführungsformen erläutert. Es zeigen:
Fig. 1: ein Blockschaltbild einer erfindungsgemäßen Vorrichtung zur Signalisierung eines Bremsvorganges bzw. zur Durchführung des erfindungsgemäßen Verfahrens und
Fig. 2: ein Verlaufsdiagramm zur Veranschaulichung einer automatischen Notbremsung in Bezug auf den erfindungsgemäßen Zeitverlauf für den Folgefahrer.

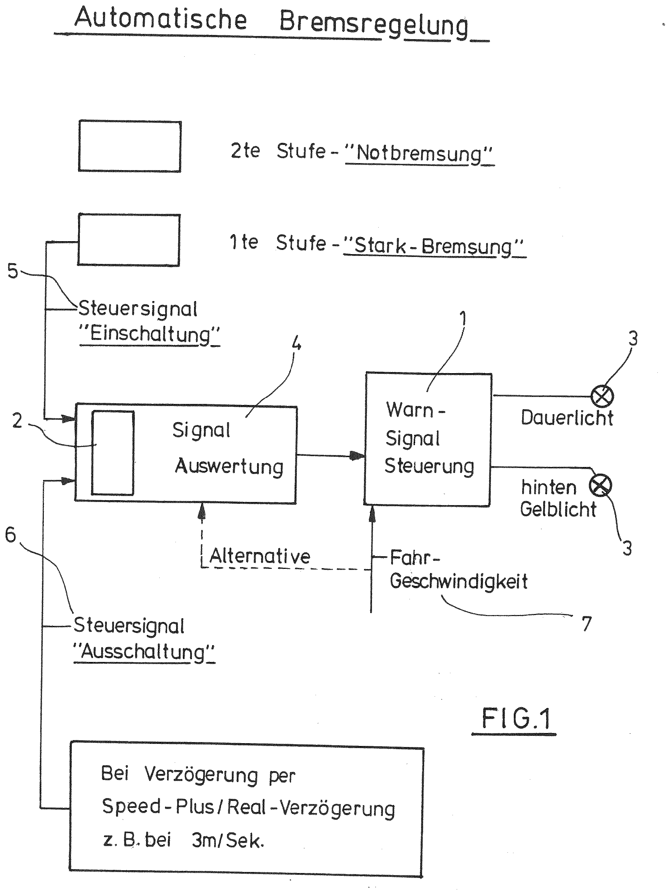

Die in Fig. 1 gezeigte erfindungsgemäße Ausführungsform der Vorrichtung zur Signalisierung eines Bremsvorganges besteht aus einer Steuerung (1) und einer Auswerteeinheit (2). Die Steuerung (1) steuert einen Signalgeber (3) an, der in der gezeigten Ausführungsform durch die hinteren Richtungsanzeigersegmente eines Kraftfahrzeugs gegeben ist. Es ist an die Nutzung einer erfindungsgemäßen Vorrichtung zusammen mit verschiedenen Ausführungsformen von rückwärtigen Richtungsanzeigern (3) wie zum Beispiel Glühlampen oder Leuchtdioden mit oder ohne separate Ansteuerelektronik gedacht.

Die Auswerteeinheit (2) weist eine Schnittstelle (4) auf, die eine Kommunikation mit weiterer Elektronik ermöglicht. An der Auswerteeinheit (2) liegt über Ihre Schnittstelle (4) mindestens ein Signal an, das direkt oder nach Auswertung als "Einschaltung (5a)" oder als "Abschaltung" für das Warnsignal interpretiert wird und an die Steuerung (1) übergeben wird. In der gezeigten Ausführungsform liegen zwei Signale an der Auswerteeinheit (2) an. Das für die Einschaltung des erfindungsgemäßen Warnlichts ausgewertete Signal (5) zeigt an, dass eine automatische Bremsung der Stufe 1 vorliegt. Dieses Signal (5) kann in Form eines digitalen Signals, mit oder ohne zugrundeliegendem Protokoll, oder in Form eines analogen Signals vorliegen.

Das für die Abschaltung der erfindungsgemäßen Vorrichtung ausgewertete Signal (6) repräsentiert z.B. die vorliegende Bremsverzögerung. Die aus diesem Signal (6) direkt oder indirekt gewonnene Repräsentation der Bremsverzögerung wird in der Auswerteeinheit (2) mit einem Sollwert verglichen, unterhalb dessen die erfindungsgemäße Warnvorrichtung deaktiviert wird.

Die Steuerung (1) kann zudem noch weitere Parameter (7) berücksichtigen. In der hier gezeigten Ausführungsform ist dieser Parameter (7) durch die Fahrzeuggeschwindigkeit gegeben.

Alternativ ist auch an die Auswertung des oder der zusätzlichen Parameter (7) in der Auswerteeinheit gedacht (2). In der in Fig. 1 gezeigten Ausführungsform einer erfindungsgemäßen Vorrichtung nutzt die Steuereinheit (1) einen von weiterer Fahrzeugelektronik zur Verfügung gestellten Wert der Fahrzeuggeschwindigkeit (7), um die Warnvorrichtung bei Geschwindigkeiten unterhalb einer in der Steuerung (1) festgelegten Geschwindigkeit zu deaktivieren.

Erfindungsgemäß wird durch die Vorrichtung zur Warn-Signalisierung eine an einem Fahrzeugheck vorhandene Leuchteinheit für die erfindungsgemäßen Warnzwecke angesteuert. Typischerweise ist das erfindungsgemäß ausgestattete Fahrzeug mit einem AEB-System versehen.

Insbesondere ist erfindungsgemäß vorgesehen, dass zur Vermeidung einer Heckkollision mit einem folgenden Fahrzeug ein erfindungsgemäßes Steuergerät oder eine erfindungsgemäße Steuereinrichtung derart ausgebildet ist, dass ein Einschalten der Warnleuchte genau zu dem Zeitpunkt erfolgt, an dem das von dem AEB überwachte und kontrollierte Fahrzeug in den autonomen und vom System selbständig generierten Status der Starkbremsung schaltet, in dem die Kollision noch verhinderbar ist.

Der vorstehend erläuterte Schaltzeitpunkt betrifft genau den Zeitpunkt des Wechsels der Aktionsvorgabe von einer menschlichen Vorgabe zu einer maschinellen Vorgabe. Eine Rückschaltung erfolgt dabei in Abhängigkeit von einer ermittelten Größe der jeweiligen Bremsintensität. Die Ermittlung kann unter Verwendung der bereits vorhandenen Technik erfolgen. Ein typischer Wert für die Bremsintensität für die Einleitung der Rückschaltung ist etwa ein Bereich gleich oder kleiner als 3,5 m/Sek.². Ergänzend oder anstelle der Auswertung der Bremsintensität ist es möglich, die Rückschaltung in Abhängigkeit von weiteren/anderen Parametern vorzunehmen, wobei diese Parameter vorzugsweise Zustandswerten des Fahrzeuges zugeordnet sind.

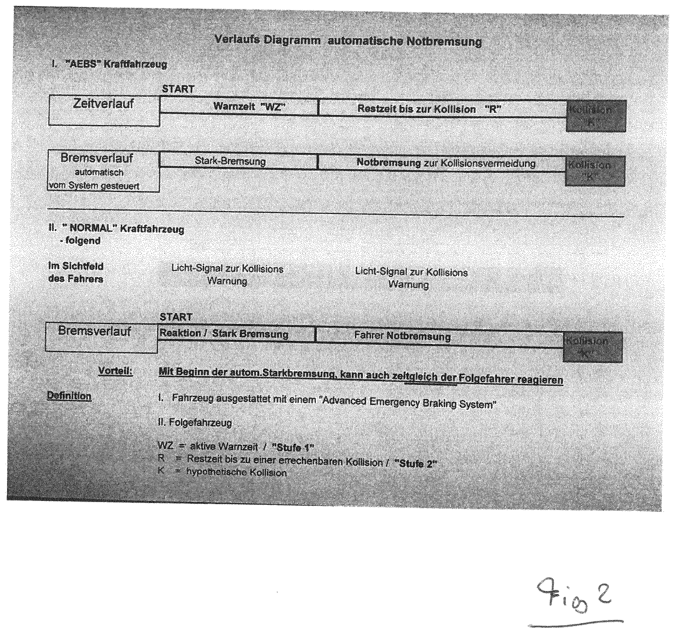

Figur 2 veranschaulicht in einem Verlaufsdiagramm die wesentlichen Verfahrensschritte bei der Durchführung einer automatischen Notbremsung. Es existiert somit eine "erste" Warnbremsstufe sowie eine "zweite" Notbremsstufe. Diese Bremsstufen werden vom AEB automatisch generiert und automatisch ausgelöst.

Erfindungsgemäß ist es möglich, den nachfolgenden Fahrer optimal und somit zeitgleich über die Einschaltung der Warnbremsstufe 1 und damit die direkt bevorstehende autonome Notbremsung zur Vermeidung einer Kollision zu informieren.

Durch die erfindungsgemäße frühzeitige Auslösung der Warnung kann dieser Zeitgewinn von 0,5 - 1,0 Sek. bei z.B. 80Km/ Std. eine Strecke von 11- 22 Metern einsparen und dadurch eine eventuelle Kollision wirksam vermeiden.

## Patentansprüche

1. Verfahren zur Kollisions-Warnlichtsignalisierung eines, mit einem automatischen Bremssystem für Notbremsungen ausgerüsteten Kraftfahrzeuges, vom Heck desselben an nachfahrende Kraftfahrzeuge, bei dem ein automatisch ausgelöster Bremsvorgang in einer ersten Stufe und in einer zweiten Stufe durchgeführt wird, wobei in der ersten Stufe eine Starkbremsung und in der zweiten Stufe eine Notbremsung durchgeführt wird, **dadurch gekennzeichnet, dass** ein optimaler Warnungsbeginn per Steuersignal (5)geschaltet wird, wobei das Vorliegen des Steuersignals (5) den Beginn der ersten Stufe der autonomen Bremsung signalisiert, und dass dieser Warnbeginn zeitgleich für den Fahrer eines Folgefahrzeugs durch ein abgestrahltes Lichtsignal übermittelt wird, wobei ein Einschalt- (5a) wie auch ein Ausschaltsignal (6) von einer Steuerungseinheit (1) an eine zur Abstrahlung des Lichtsignals dienende Leuchteinheit (3) am Heck dieses Fahrzeuges übermittelt wird, wobei das vom Heck abgestrahlte Lichtsignal für den Fahrer eines Folgefahrzeuges sicher und wirksam vor einer unmittelbar bevorstehenden Notbremsung warnend ist, dass ein Einschalten des Kollisions-Warnlichtsignals genau zu dem Zeitpunkt erfolgt, an dem das autonome Bremssystem eigenständig in den generierten Status der Warnzeit und Starkbremsung schaltet und dass das Kollisions-Warnlichtsignal als zusätzliches Warnsignal zum normalen Bremslicht generiert wird, sodass eine per Reflex des Fahrers eines Folgefahrzeugs einzuleitende Notfallbremsung ermöglicht ist.

2. Verfahren nach Anspruch 1, **dadurch gekennzeichnet, dass** das Steuersignal (5) und das Ausschaltsignal (6) in einer Auswerteinheit (2) mit weiteren zweckmäßigen Fahrzustandsdaten kombinierbar sind, und danach das Einschalt- (5a) wie auch das Ausschaltsignal (6) von der Steuereinheit (1) an eine Lichtsignal abstrahlende Leuchteinheit (3) am Heck des Fahrzeugs übermittelt wird.

3. Verfahren nach mindestens einem der vorstehenden Ansprüche, **dadurch gekennzeichnet, dass** die Übermittlung auf elektronischem Weg zum Folgefahrzeug gelangt und im Folgefahrzeug ein vom Fahrer wahrnehmbares beliebiges Warnsignal auslöst.

4. Verfahren nach mindestens einem der vorstehenden Ansprüche, **dadurch gekennzeichnet, dass** der Warnbeginn von einem beliebigen elektronischen System im Folgefahrzeug erfassbar ist und in einem dort vorhandenen autonomen Brems-/Assistenzsystem auch als gleichzeitiger Abbremsungsbeginn umgesetzt wird.

5. Verfahren nach mindestens einem der vorstehenden Ansprüche, **dadurch gekennzeichnet, dass** die Auslösung des Warnsignals als eine Bedingung an eine Geschwindigkeitsverlaufskurve oder Mindestgeschwindigkeit gekoppelt ist, wobei ein Wert über dem Sollwert der Bedingung "ein" und ein Wert unter dem Sollwert der Bedingung "aus" bedeutet.

6. Verfahren nach mindestens einem der vorstehenden Ansprüche, **dadurch gekennzeichnet, dass** auch andere im Kraftfahrzeug vorhandene elektronisch erfassbare Fahrzustände als Algorithmen mit auswertbar sind und für weitere Steuerzwecke einsetzbar sind.

7. Verfahren nach mindestens einem der vorstehenden Ansprüche, **dadurch gekennzeichnet, dass** für eine Auslösung des Warnsignals eine Mindest-Fahrgeschwindigkeit vorliegen muss.

8. Verfahren nach einem der vorstehenden Ansprüche, **dadurch gekennzeichnet, dass** eine Signalauswertung (4) ein Signal, aus dem sich die aktuelle Bremsverzögerung ergibt, mit einem Sollwert vergleicht und bei einer Unterschreitung des Sollwertes die Warnvorrichtung deaktiviert.

9. Verfahren nach einem der vorstehenden Ansprüche, **dadurch gekennzeichnet, dass** das Ausschaltsignal (6) bei Unterschreiten einer vorgebbaren Bremsintensität generiert wird.

10. Verfahren nach einem der vorstehenden Ansprüche, **dadurch gekennzeichnet, dass** die Steuerungseinheit (1) die Fahrzeuggeschwindigkeit auswertet.

11. Vorrichtung zur Kollisions-Warnlichtsignalisierung eines mit einem automatischen Bremssystem für Notbremsungen ausgerüsteten Kraftfahrzeug vom Heck desselben an nachfahrende Kraftfahrzeuge, die eine Steuereinheit (1) aufweist, so dass ein automatisch ausgelöster Bremsvorgang in einer ersten Stufe und in einer zweiten Stufe durchgeführt wird, wobei in der ersten Stufe eine Starkbremsung und in der zweiten Stufe eine Notbremsung durchgeführt wird, **dadurch gekennzeichnet, dass** die Steuereinheit (1) das Verfahren gemäß Patentanspruch 1 steuert.

## Claims

1. A method for collision warning light signaling of a motor vehicle equipped with an automatic braking system for emergency braking, from the rear thereof to following motor vehicles, in which an automatically generated braking process is carried out in a first stage and in a second stage, wherein hard braking is carried out in the first stage and emergency braking is carried out in the second stage, **characterized in that** an optimal warning start point is switched by a control signal (5), wherein the presence of the control signal (5) signals the start of the first stage of autonomous braking, and **in that** this warning start point is transmitted at the same time by a light signal emitted to the driver of a following vehicle, wherein a switch-on signal (5a) and a switch-off signal (6) are transmitted from a control unit (1) to a light emitting unit (3) at the rear of this vehicle which serves to emit the light signal, wherein the light signal emitted from the rear to the driver of a following vehicle reliably and effectively provides a warning of immediately imminent emergency braking, **in that** a collision warning light signal is switched on exactly at the time when the autonomous braking system switches independently into the generated status of warning time and hard braking, and **in that** the collision warning light signal is generated as an additional warning signal to the normal brake light, enabling an emergencycase braking to be initiated by the reflex of the driver of a following vehicle.

2. The method according to claim 1, **characterized in that** the control signal (5) and the switch-off signal (6) can be combined with further expedient driving status data in an evaluation unit (2), and then the switch-on signal (5a) and the switch-off signal (6) are transmitted from the control unit (1) to a light emitting unit (3) at the rear of the vehicle, which emits a light signal.

3. The method according to at least one of the preceding claims, **characterized in that** the transmission to the following vehicle is implemented by electronic means and triggers any warning signal which can be perceived by the driver in the following vehicle.

4. The method according to at least one of the preceding claims, **characterized in that** the warning start point can be detected by any electronic system in the following vehicle and is also implemented in an autonomous braking/assistance system, which is present therein, as a simultaneous braking start point.

5. The method according to at least one of the preceding claims, **characterized in that** the triggering of the warning signal is coupled as a condition to a speed curve or minimum speed, wherein a value above the set value of the condition represents "on" and a value below the set value of the condition represents "off".

6. The method according to at least one of the preceding claims, **characterized in that** other electronically detectable driving states which are present in the motor vehicle can also be evaluated as algorithms and can be used for further control purposes.

7. The method according to at least one of the preceding claims, **characterized in that** a minimum driving speed has to be present for triggering the warning signal.

8. The method according to one of the preceding claims, **characterized in that** a signal evaluation device (4) compares a signal, from which the current braking deceleration is produced, with a set value and deactivates the warning device when the set value is not reached.

9. The method according to one of the preceding claims, **characterized in that** the switch-off signal (6) is generated upon falling below a predeterminable braking intensity.

10. The method according to one of the preceding claims, **characterized in that** the control unit (1) evaluates the vehicle speed.

11. A device for collision warning light signaling of a motor vehicle provided with an automatic braking system for emergency braking, from the rear thereof to following motor vehicles, the device having a control unit (1), so that an automatically triggered braking process is carried out in a first stage and in a second stage, wherein hard braking is carried out in the first stage and emergency braking is carried out in the second stage, **characterized in that** the control unit (1) controls the method according to claim 1.

## Revendications

1. Procédé de signalisation lumineuse d'avertissement de collision pour un véhicule automobile équipé d'un système de freinage automatique pour des freinages d'urgence, situé à l'arrière de ce véhicule, à destination des véhicules automobiles qui suivent ce véhicule, dans lequel un processus de freinage déclenché automatiquement est mis en oeuvre selon une première étape et une deuxième étape, un freinage fort étant effectué dans la première étape et un freinage d'urgence dans la deuxième étape, **caractérisé en ce qu'**un début d'avertissement optimal est commuté par un signal de commande (5), la présence du signal de commande (5) signalant le début de la première étape du freinage autonome, et **en ce que** ce début d'avertissement est transmis simultanément au conducteur d'un véhicule suiveur par un signal lumineux émis, un signal d'activation (5a) ainsi qu'un signal de désactivation (6) étant transmis par une unité de commande (1) à une unité d'éclairage (3) servant à émettre le signal lumineux à l'arrière de ce véhicule, le signal lumineux émis par l'arrière avertissant de manière sûre et efficace le conducteur d'un véhicule suiveur d'un freinage d'urgence imminent, **en ce qu'**une activation du signal lumineux d'avertissement de collision a lieu exactement au moment où le système de freinage autonome passe de manière autonome dans l'état généré du temps d'avertissement et du freinage d'urgence et **en ce que** le signal lumineux d'avertissement de collision est généré en tant que signal d'avertissement supplémentaire au feu de freinage normal, de sorte qu'est rendu possible un freinage d'urgence à déclencher par réflexe du conducteur d'un véhicule suiveur.

2. Procédé selon la revendication 1, **caractérisé en ce que** le signal de commande (5) et le signal d'arrêt (6) peuvent être combinés dans une unité d'évaluation (2) avec d'autres données d'état de conduite appropriées, et **en ce que** le signal d'activation (5a) ainsi que le signal d'arrêt (6) sont ensuite transmis par l'unité de commande (1) à une unité d'éclairage (3) située à l'arrière du véhicule, émettant un signal lumineux.

3. Procédé selon au moins l'une des revendications précédentes, **caractérisé en ce que** la transmission parvient au véhicule suiveur par voie électronique et déclenche dans le véhicule suiveur un signal d'avertissement quelconque perceptible par le conducteur.

4. Procédé selon au moins l'une des revendications précédentes, **caractérisé en ce que** le début d'avertissement peut être détecté par un système électronique quelconque dans le véhicule suiveur et est également mis en oeuvre en tant que début de freinage simultané dans un système de freinage / d'assistance autonome présent dans ce véhicule suiveur.

5. Procédé selon au moins l'une des revendications précédentes, **caractérisé en ce que** le déclenchement du signal d'avertissement est relié en tant que condition à une courbe d'évolution de la vitesse ou à une vitesse minimale, une valeur supérieure à la valeur de consigne de la condition signifiant "marche" et une valeur inférieure à la valeur de consigne de la condition signifiant "arrêt".

6. Procédé selon au moins l'une des revendications précédentes, **caractérisé en ce que** d'autres états de conduite détectables électroniquement et présents dans le véhicule automobile sont également aptes à être évalués en tant qu'algorithmes et à être utilisés à d'autres fins de commande.

7. Procédé selon au moins l'une des revendications précédentes, **caractérisé en ce qu'**une vitesse de conduite minimale doit être présente pour un déclenchement du signal d'avertissement.

8. Procédé selon l'une des revendications précédentes, **caractérisé en ce qu'**une évaluation de signal (4) compare un signal, dont résulte la décélération de freinage actuelle, à une valeur de consigne et désactive le dispositif d'avertissement lorsque la valeur de consigne n'est pas atteinte.

9. Procédé selon l'une des revendications précédentes, **caractérisé en ce que** le signal de désactivation (6) est généré lorsque l'intensité de freinage passe en dessous d'une valeur prédéterminable.

10. Procédé selon l'une des revendications précédentes, **caractérisé en ce que** l'unité de commande (1) évalue la vitesse du véhicule.

11. Dispositif de signalisation lumineuse d'avertissement de collision pour un véhicule automobile équipé d'un système de freinage automatique pour des freinages d'urgence, situé à l'arrière de ce véhicule, à destination des véhicules automobiles qui suivent ce véhicule, qui comporte une unité de commande (1) telle qu'un processus de freinage déclenché automatiquement est mis en oeuvre selon une première étape et une deuxième étape, un freinage fort étant effectué dans la première étape et un freinage d'urgence dans la deuxième étape, **caractérisé en ce que** l'unité de commande (1) commande le procédé selon la revendication 1.
